# FASCICULE DE BREVET EUROPEEN

(11) **EP 2 598 722 B1**
(45) Date de publication et mention de la délivrance du brevet: **31.08.2016**
(21) Numéro de dépôt: 11755382.6
(22) Date de dépôt: 28.07.2011
(51) Int. Cl.: F01D 17/16

(54) **DISPOSITIF DE COMMANDE D'AUBES PIVOTANTES DE TURBOMACHINE**
VORRICHTUNG ZUR STEUERUNG DER SCHWENKBAREN SCHAUFELN EINES TURBINENMOTORS
DEVICE FOR CONTROLLING PIVOTING BLADES OF A TURBINE ENGINE

(30) Priorité: 30.07.2010 FR 1056338
(43) Date de publication de la demande: 05.06.2013
(73) Titulaire: Turbomeca, 64510 Bordes (FR)
(72) Inventeur: COLETTE, Christophe, F-64000 Pau (FR); LALANNE, Bernard, F-64000 Pau (FR)
(74) Mandataire: Milien, Jean-Baptiste Aurélien
(86) Numéro de dépôt international: PCT/FR2011/051833
(87) Numéro de publication internationale: WO 2012/013909

(56) Documents cités:
- EP-A1- 1 188 933
- FR-A- 1 190 067
- FR-A1- 2 784 711
- GB-A- 1 216 920
- GB-A- 1 276 720
- GB-A- 2 078 865
- US-A- 3 376 018
- US-A- 4 979 874

## Description

La présente invention concerne les dispositifs de commande d'aubes pivotantes de turbomachine, et plus particulièrement les dispositifs commandant les aubes pivotantes de manière synchronisée.

Dans une turbomachine, il est connu d'utiliser un ou plusieurs étages d'aubes de stator pour ajuster le flux et la direction d'écoulement des gaz traversant la section de compression en fonction du régime de fonctionnement de la turbomachine. Ces étages d'aubes de stator comportent une pluralité d'aubes (appelées également aubes à calage variable) qui peuvent pivoter autour de leur axe de liaison au stator de sorte que leur angle de calage puisse être modifié en fonction du régime de fonctionnement de la turbomachine.

Les dispositifs de commande d'aubes pivotantes de turbomachine connus comprennent habituellement une pluralité d'aubes pivotantes réparties azimutalement sur au moins 90° (quatre vingt dix degrés d'angle) autour de l'axe de la turbomachine, lesdites aubes pivotantes étant orientées sensiblement radialement par rapport à l'axe de la turbomachine, et une portion d'anneau de commande pour commander le pivotement des aubes, chaque aube étant reliée à la portion d'anneau de commande par une biellette, la portion d'anneau de commande étant maintenue autour de l'axe de la turbomachine par l'ensemble des biellettes.

Dans les turbomachines comprenant un compresseur axial, les aubes sont orientées radialement autour de l'axe de la turbomachine et pivotent autour d'un axe radial. On notera que par le terme « orienté sensiblement radialement » on désigne l'ensemble des configurations où les axes radiaux autour desquels pivotent les aubes forment un angle compris entre 45° et 90° avec l'axe de la turbomachine.

Par ailleurs, on notera également que par le terme « portion d'anneau » on désigne indifféremment un anneau complet ou juste une portion d'anneau.

La portion d'anneau est généralement pilotée par un vérin qui la fait pivoter autour de l'axe de la turbomachine, dans un sens ou dans l'autre. La cinématique de ce type de dispositif est complexe et très précise de sorte que si des jeux précis ne sont pas respectés, le dispositif peut devenir hyperstatique (i.e. se bloque). Ceci implique notamment des contraintes drastiques de positionnement et de centrage de la portion d'anneau par rapport à l'axe de la turbomachine. Ainsi, un léger écart par rapport à ces positions génère très rapidement des contraintes importantes dans l'ensemble du dispositif de commande, voire son blocage. Ce problème de centrage (ou plus généralement de positionnement) est accentué par les différences de dilatations thermiques de chaque pièce du dispositif. GB 1276 720, FR 1 190 067, FR 2784 711, GB 1 216 920 et US 4 979 874 divulguent des exemples de dispositif de commande d'autres pivotantes

Un but de la présente invention est de remédier au moins partiellement aux inconvénients énoncés ci-dessus.

L'invention conformément à la revendication 1 atteint son but par le fait qu'au moins deux biellettes sont reliées à la portion d'anneau par une liaison rotule, chacune des autres biellettes étant reliées à la portion d'anneau par une liaison pivot glissant.

Pour rappel, une liaison pivot (ou pivot simple) est une liaison présentant un seul degré de liberté en rotation, les autres degrés de liberté étant bloqués (deux en rotation et trois en translation). Une liaison pivot glissant est une liaison pivot où le degré de liberté en translation selon l'axe de rotation du pivot est libéré. Ainsi une liaison pivot glissant autorise les mouvements selon un degré de liberté en rotation et selon un degré de liberté en translation, tandis que les quatre autres degrés de libertés (deux en translation et deux en rotation) sont bloqués. Une liaison rotule est une liaison présentant trois degrés de liberté en rotation, les degrés de liberté en translation étant bloqués.

On comprend donc que les liaisons pivot sont glissantes selon la direction de leur axe de pivotement, et ne sont soumises qu'aux efforts transverses par rapport à leur axe de pivotement. Par conséquent, le poids de la portion d'anneau est majoritairement supporté par les liaisons rotule. En effet, les liaisons pivot étant glissantes, ces dernières ne reprennent qu'une partie du poids de la portion d'anneau, cette partie dépendant de l'orientation de la liaison pivot glissant par rapport à la direction de la gravité. Les aubes étant orientées radialement, les liaisons pivot glissant assurent un guidage radial et azimutal de la portion d'anneau. En d'autres termes, bien que l'ensemble des biellettes participe au maintien de la portion d'anneau, cette dernière est majoritairement maintenue par les liaisons rotule.

Par ailleurs, les liaisons pivot étant glissantes, un déplacement de la portion d'anneau par rapport à sa position de centrage vis-à-vis de l'axe de la turbomachine (i.e. un déplacement radial de la portion d'anneau par rapport à sa position de centrage vis-à-vis de l'axe de la turbomachine), n'induit pas, ou très peu, d'effort dans les liaisons pivot, et dans les biellettes qui y sont reliées. Avantageusement, ce déplacement est minimisé, par exemple par une optimisation des angles et de la position des points de référence dans la géométrie de la portion d'anneau.

En outre, le maintien de l'anneau autour de sa position de centrage étant assuré essentiellement par les deux liaisons rotule, ceci permet un positionnement suffisamment précis de la portion d'anneau autour de sa position de centrage pour assurer une commande fiable et précise du pivotement synchronisé des aubes, tout en autorisant de légers déplacements de la portion d'anneau autour de cette position de centrage. Les inventeurs ont observé que le centrage est optimisé et les déplacements minimisés lorsque l'axe de rotation des pivots du côté de la portion d'anneau et l'axe de rotation des aubes s'intersectent au voisinage de l'axe de la turbomachine.

Ainsi, le dispositif de commande selon l'invention permet de s'affranchir du centrage de la portion d'anneau nécessaire dans les dispositifs de l'art antérieur.

En outre, en s'affranchissant de ce centrage, on évite d'installer des systèmes de calages additionnels que l'on retrouve dans les dispositifs de l'art antérieur. Le dispositif de commande selon l'invention est donc plus léger et moins onéreux que les dispositifs de l'art antérieur.

On notera que le mouvement de rotation de la portion d'anneau est impulsé par des moyens de commande, par exemple un vérin imposant un mouvement tangentiel à un point de la portion d'anneau, et guidé par les deux liaisons rotule. En effet, ces liaisons rotule étant espacées angulairement autour de l'axe de la turbomachine, cet espacement angulaire combiné au blocage des mouvements en translation des points de liaison rotule entre la portion d'anneau et les biellettes impose à la portion d'anneau de se déplacer principalement en rotation autour de l'axe de la turbomachine. Les éventuels mouvements de translation de la portion d'anneau dans une direction radiale génèrent le décentrage de cette dernière, tout en restant acceptables du point de vue de la précision de la commande. Selon une variante, pour limiter ces mouvements de décentrage et assister les liaisons rotule dans le guidage en rotation de la portion d'anneau, l'une des liaisons pivot glissant est bloquée en glissement pour former une liaison pivot simple.

Par ailleurs une liaison rotule présente une masse et une susceptibilité à l'usure plus importantes qu'une liaison pivot glissant (ou pivot simple). En combinant l'utilisation d'un nombre réduit de liaisons rotule pour certaines biellettes et de liaisons pivot glissant (ou simple) pour les autres biellettes, on réduit la masse du dispositif de commande tout en améliorant sa fiabilité par rapport aux dispositifs de commande connus, notamment utilisant uniquement des liaisons rotule ou des liaisons rotule glissante. Ceci participe à améliorer les performances de la turbomachine sur lequel le dispositif de commande est monté (ou destiné à être monté).

Préférentiellement, les deux liaisons rotule sont espacée azimutalement d'environ 90°.

Cet espacement angulaire entre les deux rotules autour de l'axe de la turbomachine permet de minimiser les efforts auxquels chacune de ces liaisons est soumise lors de la commande des aubes. En effet, un espacement angulaire à 90° permet à chacune des liaisons rotule de supporter indépendamment de l'autre les composantes perpendiculaire de chacun des efforts, ce qui répartit les efforts de manière homogène, notamment dans un dispositif à géométrie circulaire.

En outre, cette disposition à 90° des liaisons rotule améliore le guidage du mouvement rotatif de la portion d'anneau.

Avantageusement, les deux biellettes reliées à la portion d'anneau par une liaison rotule sont rigides tandis que les biellettes reliées à la portion d'anneau par une liaison pivot glissant sont plus souples de manière à pouvoir se déformer élastiquement.

On comprend donc que les biellettes rigides ne se déforment pas élastiquement lors du passage d'une première position de commande de la portion d'anneau à une seconde position de commande tandis que les biellettes plus souples tendent à se déformer élastiquement lors du passage d'une première position de commande de la portion d'anneau à une seconde position de commande. Bien entendu, par l'usage du terme « plus souple » on comprend plus souple que les biellettes rigides. En d'autres termes, les biellettes reliées à la portion d'anneau par une liaison pivot glissant sont plus souples que les biellettes reliées à la portion d'anneau par une liaison rotule.

En se déformant élastiquement, les biellettes reliées à la portion d'anneau par une liaison pivot glissant reprennent des efforts auxquels le dispositif de commande est soumis. Par ailleurs, en reprenant des efforts, cette déformation élastique évite de bloquer un mouvement du dispositif en autorisant un degré de liberté supplémentaire dans le mouvement relatif des points d'attache de ces biellettes. Ceci permet notamment d'autoriser des mouvements de rotation qui sont bridés par une liaison pivot glissant mais qui seraient autorisés par une liaison rotule. Par conséquent, ces déformations élastiques permettent d'éviter une trop grande sollicitation des liaisons pivot glissant, et les préservent contre les phénomènes d'usure. Par ailleurs, ces déformations facilitent le mouvement de rotation de la portion d'anneau entre une première position de commande et une seconde position de commande. Par conséquent, les efforts générés par le vérin de commande peuvent être moins importants. En outre, le décentrage de la portion d'anneau est moindre, ce qui améliore encore la précision de la synchronisation de la commande de pivotement de l'ensemble des aubes.

En outre, les liaisons rotule étant celles qui maintiennent la portion d'anneau, les biellettes qui sont connectées à ces liaisons sont suffisamment rigides pour maintenir la portion d'anneau en position sensiblement centrée autour de l'axe de la turbomachine (c'est-à-dire centrée ou au voisinage proche de la position de centrage) sans se déformer élastiquement, notamment pendant un mouvement de commande de la portion d'anneau.

Par ailleurs, ces biellettes rigides étant reliées à la portion d'anneau par une liaison rotule, elles ne sont pas soumises à un moment de torsion similaire à celui auquel sont soumises les biellettes reliées à la portion d'anneau par une liaison pivot glissant. En effet, le mouvement relatif de rotation des deux attaches de ces biellettes rigides est compensé par la liaison rotule.

On notera que l'avantage du point de vue de la cinématique procuré par les liaisons rotule est contrebalancé par leur masse importante et leur susceptibilité à l'usure. C'est pourquoi les inventeurs ont conçu un dispositif de commande équipé d'un nombre minimum de liaisons rotule (c'est-à-dire deux) reliées à des biellettes rigides, et où les autres liaisons sont des liaisons pivot glissant reliées à des biellettes plus souples, préférentiellement déformables élastiquement en torsion.

Avantageusement, les biellettes plus souples sont élastiquement déformables en torsion et en flexion.

Ceci permet de compenser les blocages éventuellement réalisés par les liaisons pivots et les biellettes rigides qui y sont connectées afin de faciliter le déplacement de la portion d'anneau tous en diminuant les contraintes mécaniques aux voisinages des liaisons pivots glissant et des liaisons rotules.

Par la suite on utilisera le terme « biellette élastique » pour désigner une biellette plus souple qui est déformable élastiquement, tandis que le terme « biellette rigide » est bien entendu utilisé pour désigner une biellette qui est rigide.

L'invention concerne également une turbomachine équipée d'un dispositif de commande d'aubes pivotantes selon l'invention tel que décrit ci-dessus.

L'invention et ses avantages seront mieux compris à la lecture de la description détaillée suivante d'un mode de réalisation donné à titre d'exemple non limitatif. Cette description fait référence aux planches de dessins annexées sur lesquelles :
- la figure 1 représente une vue partielle en perspective d'un mode de réalisation du dispositif de commande selon l'invention,
- la figure 2 représente une vue en perspective éclatée du montage d'une biellette élastique avec une liaison pivot glissant de la figure 1,
- la figure 3 représente une vue en perspective éclatée du montage d'une biellette rigide avec une liaison rotule de la figure 1,
- la figure 4 représente la cinématique d'une biellette élastique lors de la rotation de l'anneau de commande,
- la figure 5 est une vue selon la flèche V de la figure 4,
- la figure 6 représente la cinématique d'une biellette rigide lors de la rotation de l'anneau de commande, et
- la figure 7 représente une turbomachine équipée d'un dispositif de commande d'aubes pivotantes selon l'invention.

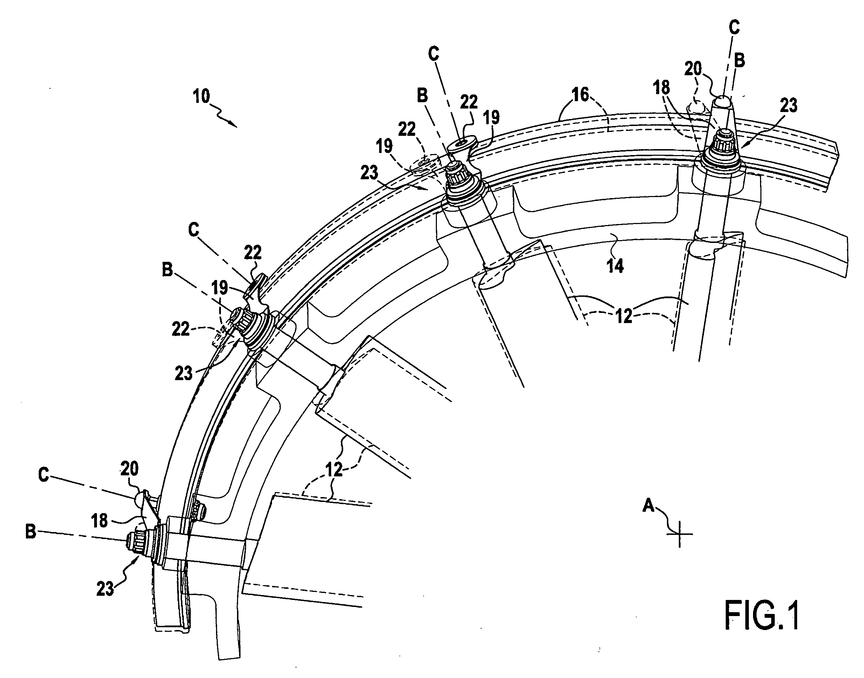

La figure 1 représente un mode de réalisation du dispositif de commande d'aubes pivotantes de turbomachine selon l'invention. Dans ce mode de réalisation, les aubes sont orientées radialement par rapport à l'axe de la turbomachine. La vue représentée est une vue partielle, le dispositif complet s'étendant sur 360° autour de l'axe A d'une turbomachine (non représentée). Cet axe A défini la direction longitudinale. Les directions radiales et azimutale sont définies par rapport à cet axe A.

Le dispositif de commande 10 comporte une pluralité d'aubes 12 qui sont montées pivotantes sur le stator 14. L'axe de pivotement B de chacune des aubes 12 est orienté selon une direction radiale. Chacune des aubes 12 est montée sur le stator 14 par une liaison pivot simple 23, c'est-à-dire une liaison pivot où le seul mouvement (ou degré de liberté) autorisé est un mouvement de rotation autour de l'axe B.

Chacune des aubes 12 est reliée à un anneau de commande 16 par l'intermédiaire d'une biellette. Chaque biellette rigide 18 relie une aube 12 à l'anneau 16 par l'intermédiaire d'une liaison rotule 20, tandis que chaque biellette élastique 19 relie une aube 12 à l'anneau 16 par l'intermédiaire d'une liaison pivot glissant 22. L'ensemble du dispositif 10 présente deux biellettes rigides 18 et deux liaisons rotule 20. Ces deux biellettes rigides 18 sont espacées azimutalement de 90° autour de l'axe A. Les deux biellettes rigides 18 sont donc reliées à deux aubes 12 espacées azimutalement de 90°, et à l'anneau 16 par les deux liaisons rotule 20 qui sont également espacées azimutalement de 90°.

On notera que les mouvements (ou degrés de liberté) autorisés par un pivot glissant 22 sont les rotations autour de l'axe C et les translations le long de cet axe C.

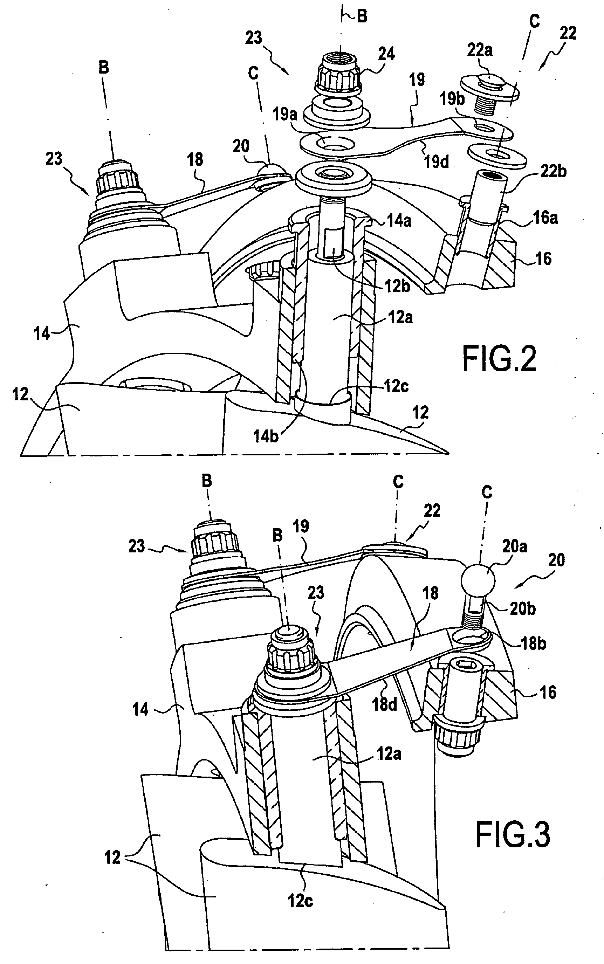

On notera également que la souplesse conférée aux biellettes élastiques 19 par rapport aux biellettes rigides 18 est notamment due à leur profil central 19d plus étroit que le profil 18d des biellettes rigides 18 (cf. fig.2 et 3).

La figure 1 représente d'une part l'anneau 16 en traits continus correspondant à une première position de commande des aubes 12, et l'anneau 16 en traits discontinus correspondant à une seconde position de commande. Pour mener l'anneau 16 depuis la première à la seconde position de commande, un vérin (non représenté) relié à l'anneau 16 impose à un point de liaison vérin/anneau un mouvement de translation tangentiel à la direction azimutale de l'anneau, ce qui a pour conséquence, l'anneau 16 étant maintenu autour de l'axe A par les liaisons rotule 20, de déplacer l'anneau 16 azimutalement. Par conséquent l'anneau 16 tourne sur lui-même autour de l'axe A d'un certain angle.

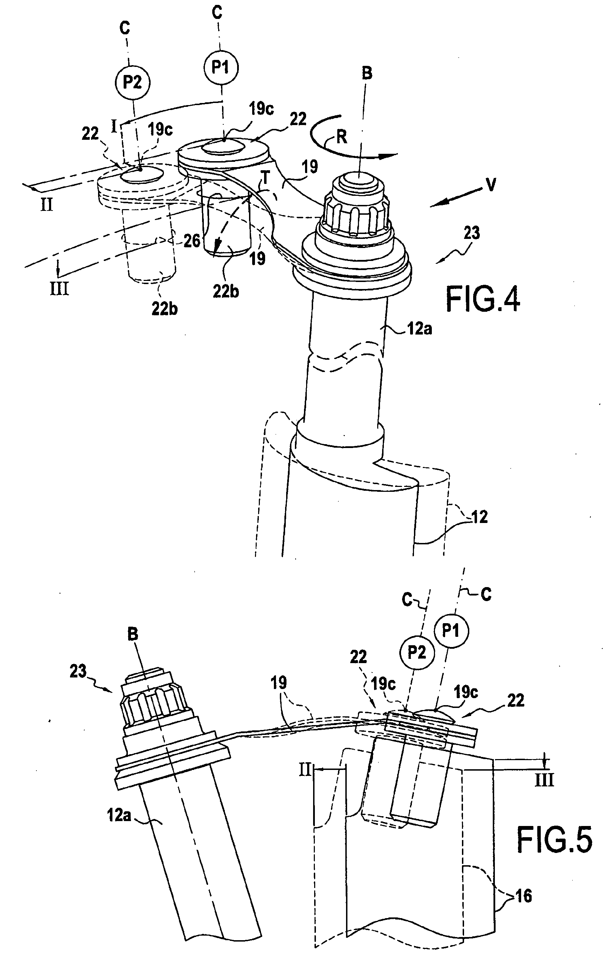

On notera que lors du déplacement azimutal de l'anneau 16 les biellettes 18 et 19 supportant l'anneau 16 pivotent, et ces dernières imposent à l'anneau 16 un mouvement de translation à l'anneau 16 le long de l'axe A. Dans cet exemple, la première position de commande correspondant à une position où les biellettes 18 et 19 sont sensiblement perpendiculaires à l'anneau 16 et au stator 14, la position des biellettes dans la seconde position impose un mouvement de rapprochement selon l'axe A de l'anneau 16 vers le stator 14. Le stator 14 étant fixé à la turbomachine (non représentée), c'est nécessairement l'anneau 16 qui se déplace par rapport au stator 14. Ce mouvement est représenté par la flèche II sur les figures 4, 5 et 6.

La figure 2 représente une vue en perspective éclatée du système de raccordement d'une aube 12 montée sur le carter 14 via une liaison pivot 23, avec l'anneau 16 par l'intermédiaire d'une biellette élastique 19 et d'une liaison pivot glissant 22.

L'aube 22 est montée sur le carter 14 à l'aide d'une liaison pivot 23. La tige 12a de l'aube 12 est engagée dans un fourreau 14a du stator 14, formant ainsi une liaison pivot entre le stator 14 et l'aube 12. Par ailleurs, la biellette 19 est directement reliée à l'aube 12. La tige 12a est engagée dans l'oeilleton 19a de la biellette 19 et verrouillée à l'aide d'un d'écrou 24 et de rondelles enserrant la biellette 19 de part et d'autre. L'écrou 24 permet également de bloquer l'aube 12 en translation par rapport au stator 14, en menant l'épaulement 12c de la tige 12a en appui contre l'extrémité 14b du fourreau 14a. Un méplat 12b ménagé sur la tige 12a coopère par complémentarité de forme avec l'oeilleton 19a de la biellette 19 couplant ainsi l'aube 12 en rotation avec la biellette 19.

L'oeilleton 19b, disposé sur la biellette 19 à l'opposé de l'oeilleton 19a, est relié à l'anneau 16 par la liaison pivot glissant 22. Une vis 22a s'étendant au travers de l'oeilleton 19b et des rondelles enserrant la biellette 19 relient la biellette 19 à une tige 22b. La vis 22a est vissée à la tige 22b qui est engagées dans un fourreau 16a de l'anneau 16. La tige 22b peut librement coulisser et pivoter dans le fourreau 16a selon et autour de l'axe C.

La figure 3 représente une vue en perspective éclatée du système de raccordement d'une aube 12 montée sur le carter 14 via une liaison pivot 23, avec l'anneau 16 par l'intermédiaire une biellette rigide 18 et d'une liaison rotule 20.

La liaison pivot 23 est similaire à celle décrite précédemment. Dans la figure 3, les éléments constituants cette liaison 23 sont représentés assemblés.

La liaison rotule 20 relie la biellette rigide 18 à l'anneau 16. Un embout sphérique 20a d'une tige 20b filetée et vissée sur l'anneau 16 est engagé dans l'oeilleton 18b de la biellette rigide 18 et coopèrent par complémentarité de forme avec l'oeilleton 18b. Ainsi tous les mouvements de rotation (i.e. les trois degrés de liberté en rotation) sont permis entre la biellette rigide 18 et l'anneau 16.

Les figures 4 et 5 représentent les déplacements de l'extrémité de la biellette élastique 19 qui est reliée à l'anneau 16 (non représenté sur la figure 4). La représentation en traits continus correspond au positionnement des éléments lorsque l'anneau 16 est dans la première position de commande de la figure 1 tandis que la représentation en traits discontinus correspond au positionnement des éléments lorsque l'anneau est dans la seconde position de commande de la figure 1.

Lors du déplacement de l'anneau 16 depuis la première vers la seconde position de commande, le point de référence 19c, correspondant au centre de l'oeilleton 19b de la biellette élastique 19 passe de la position P1 à la position P2.

Ainsi pour passer de la position P1 à la position P2, le mouvement global du point de référence 19c est décomposé en deux mouvements élémentaires. Ceci a pour conséquence de faire pivoter l'aube 22 selon la flèche R (cf. fig.4).

Le premier mouvement élémentaire est représenté par la flèche I, correspondant à la rotation de l'anneau 16 autour de l'axe A de la turbomachine, ainsi qu'un éventuel déplacement en translation de corps rigide (imposé par le vérin et par les biellettes rigides 18). Ce mouvement de rotation impose une déformation en torsion de biellette élastique 19 représenté par la flèche T. En effet, l'axe C du pivot glissant 22 conservant un alignement constant par rapport à l'anneau mais pas par rapport à l'axe B du pivot 23, ceci impose à la biellette 19 un mouvement de rotation selon l'axe s'étendant entre les deux oeilletons 19a et 19b (ou l'axe de la biellette 19). Les oeilletons 19a et 19b étant bridés en rotation selon la direction de l'axe de la biellette 19, la biellette 19 subit une torsion.

On notera que ce mouvement 1 est imposé à l'anneau 16 par le vérin non représenté et par les biellettes rigides 18 qui guident l'anneau 16.

Le deuxième mouvement élémentaire est représenté par la flèche II, et correspond à un mouvement de translation axial selon l'axe A de la turbomachine, décrit précédemment.

Un mouvement relatif entre le point 19c et l'anneau 16 a également lieu. Ce mouvement relatif est représenté par la flèche III. La position du pourtour extérieur de l'anneau 16 est représentée par le trait 26 sur la tige 22b sur la figure 4. Lors du mouvement I, bien qu'étant déformable élastiquement, la biellette 19 tend à maintenir le point 19c. dans le même plan que celui dans lequel il se trouve lorsque l'anneau 16 est dans la première position de commande. Par ailleurs, lors du mouvement I, l'anneau 16 reliée à la biellette 19 par la liaison pivot glissant 22 s'éloigne du plan dans lequel se trouve le point 19c dans la première position de commande. Ceci correspond au mouvement classique de va et vient d'une coordonnée d'un point dans un repère cartésien disposé sur la périphérie d'une roue lorsque cette dernière tourne sur elle-même. Dans la figure 5, ce mouvement relatif III correspond à un mouvement vers le bas de la feuille de la section de l'anneau 16 prise dans le plan de la liaison pivot glissant 22. Ce mouvement relatif est autorisé par le caractère glissant de la liaison pivot glissant 22.

On notera que les mouvements I, II, III et la déformation T décrits ci-dessus correspondent à des décompositions simples du mouvement global de l'ensemble et des déformations globales des biellettes élastique 19 en vue de simplifier la compréhension de la cinématique de l'ensemble. On gardera cependant à l'esprit que dans le mouvement d'ensemble, les biellettes élastiques 19 se déforment également en flexion (pour compenser un éventuel mouvement de corps rigide de l'anneau 16 selon la direction de la flèche III), la déformation élastique globale (i.e. déformation en flexion et en torsion) de chacune des biellettes élastiques 19 permettant de compenser le mouvement de corps rigide global de l'anneau 16 (selon la direction des flèches I et III) imposé à ce dernier par le vérin et par les biellettes rigides 18.

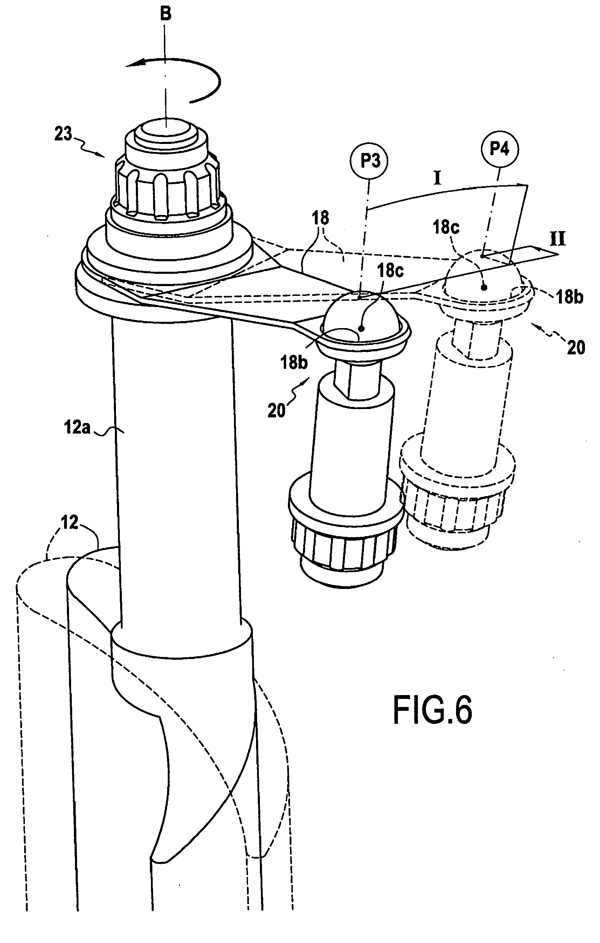

La figure 6 représente le mouvement de l'extrémité de la biellette rigide 18 qui est reliée à l'anneau 16 (non représenté). La représentation en traits continus correspond au positionnement des éléments lorsque l'anneau 16 est dans la première position de commande de la figure 1 tandis que la représentation en traits discontinus correspond au positionnement des éléments lorsque l'anneau est dans la seconde position de commande de la figure 1.

Lors du déplacement de l'anneau 16 depuis la première vers la seconde position de commande, le point de référence 18c, correspondant au centre de l'oeilleton 18b de la biellette rigide 18 passe de la position P3 à la position P4.

Ainsi pour passer de la position P3 à la position P4, le mouvement global du point de référence 18c est décomposé en deux mouvements élémentaires I et II similaires à ceux décrits précédemment et représentés par les flèches I et II.

La biellette 18 étant reliée à l'anneau 16 par une liaison rotule 20, la biellette 18 n'est pas soumise à un moment de torsion. Par conséquent, à la différence de la biellette 19, la biellette 18 ne se déforme pas en torsion. Par ailleurs, la biellette 19 est suffisamment rigide pour ne pas se déformer en flexion lors du fonctionnement normal de dispositif de commande 10. En d'autres termes, dans cet exemple, pour passer de la première position de commande à la seconde position de commande, la biellette 18 ne se déforme pas élastiquement. Ainsi, contrairement au point 19c de la biellette élastique 19 des figures 4 et 5, le point 18c de la biellette rigide 18 ne se déplace pas selon la flèche III des figures 4 et 5.

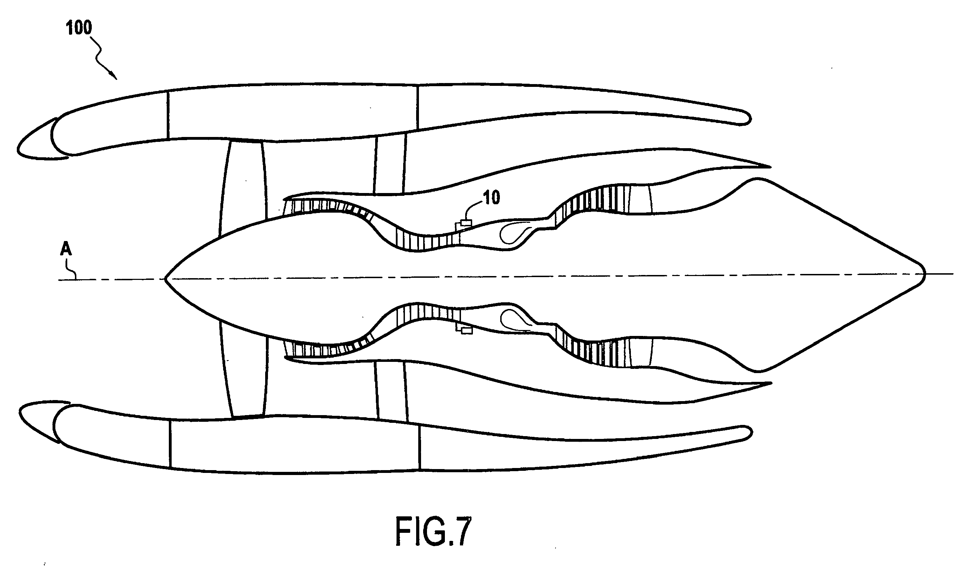

La figure 7 représente une turbomachine 100 équipée du dispositif de commande d'aubes pivotantes 10 tel que décrit ci-dessus.

Sans sortir du cadre de la présente invention, le dispositif de commande peut-être monté sur un turbomoteur d'hélicoptère.

## Revendications

1. Dispositif de commande d'aubes pivotantes de turbomachine (10) comprenant une pluralité d'aubes pivotantes (22) réparties azimutalement sur au moins 90° autour de l'axe (A) de la turbomachine, lesdites aubes pivotantes (22) étant orientées sensiblement radialement par rapport à l'axe de la turbomachine (A), et une portion d'anneau de commande (16) pour commander le pivotement des aubes (22), chaque aube (22) étant reliée à la portion d'anneau de commande (16) par une biellette (18, 19), la portion d'anneau de commande (16) étant maintenue autour de l'axe de la turbomachine (A) par l'ensemble des biellettes (18, 19), **caractérisé en ce que** au moins deux biellettes (18) sont reliées à la portion d'anneau (16) par une liaison rotule (20), chacune des autres biellettes (19) étant reliées à la portion d'anneau par une liaison pivot glissant (22).

2. Dispositif de commande (10) selon la revendication 1, **caractérisé en ce que** les deux liaisons rotule (20) sont espacées azimutalement d'environ 90°.

3. Dispositif de commande (10) selon la revendication 1 ou 2, **caractérisé en ce que** les deux biellettes (18) reliées à la portion d'anneau (16) par une liaison rotule (20) sont rigides tandis que les biellettes (19) reliées à la portion d'anneau (16) par une liaison pivot glissant (22) sont plus souples de manière à pouvoir se déformer élastiquement.

4. Dispositif de commande (10) selon la revendication 3, **caractérisé en ce que** les biellettes (19) plus souples sont élastiquement déformables en torsion et en flexion.

5. Dispositif de commande (10) selon l'une quelconque des revendications 1 à 4, **caractérisé en ce que** l'une des liaisons pivot glissant (22) est bloquée en glissement pour former une liaison pivot simple.

6. Turbomachine (100) équipée d'un dispositif de commande d'aubes pivotantes (10) selon l'une quelconque des revendications précédentes.

## Patentansprüche

1. Vorrichtung zur Steuerung von schwenkbaren Schaufeln einer Turbomaschine (10), umfassend eine Vielzahl von schwenkbaren Schaufeln (22), die über wenigstens 90° um die Achse (A) der Turbomaschine azimutal verteilt sind, wobei die schwenkbaren Schaufeln (22) gegenüber der Achse der Turbomaschine (A) im Wesentlichen radial ausgerichtet sind, sowie einen Verstellringabschnitt (16), um das Verschwenken der Schaufeln (22) zu steuern, wobei jede Schaufel (22) mit dem Verstellringabschnitt (16) durch einen Arm (18, 19) verbunden ist, wobei der Verstellringabschnitt (16) um die Achse der Turbomaschine (A) durch die Anordnung der Arme (18, 19) gehalten ist, **dadurch gekennzeichnet, dass** wenigstens zwei Arme (18) mit dem Ringabschnitt (16) durch eine Kugelgelenkverbindung (20) verbunden sind, wobei ein jeder der anderen Arme (19) mit dem Ringabschnitt durch eine Gleitdrehgelenkverbindung (22) verbunden ist.

2. Steuerungsvorrichtung (10) nach Anspruch 1, **dadurch gekennzeichnet, dass** die beiden Kugelgelenkverbindungen (20) um etwa 90° azimutal beabstandet sind.

3. Steuerungsvorrichtung (10) nach Anspruch 1 oder 2, **dadurch gekennzeichnet, dass** die beiden Arme (18), die mit dem Ringabschnitt (16) durch eine Kugelgelenkverbindung (20) verbunden sind, starr sind, während die Arme (19), die mit dem Ringabschnitt (16) durch eine Gleitdrehgelenkverbindung (22) verbunden sind, flexibler sind, um sich elastisch verformen zu können.

4. Steuerungsvorrichtung (10) nach Anspruch 3, **dadurch gekennzeichnet, dass** die flexibleren Arme (19) elastisch verdreh- und biegevorformbar sind.

5. Steuerungsvorrichtung (10) nach einem der Ansprüche 1 bis 4, **dadurch gekennzeichnet, dass** eine der Gleitdrehgelenkverbindungen (22) gegen ein Gleiten festgelegt ist, um eine einfache Drehgelenkverbindung zu bilden.

6. Turbomaschine (100), die mit einer Vorrichtung zur Steuerung von schwenkbaren Schaufeln (10) nach einem der vorhergehenden Ansprüche ausgestattet ist.

## Claims

1. A control device for controlling pivotable vanes of a turbo-machine (10) having a plurality of pivotable vanes (22) distributed in azimuth over at least 90° around the axis (A) of the turbo-machine, said pivotable vanes (22) being oriented substantially radially relative to the axis (A) of the turbo-machine, and a control ring portion (16) for controlling the pivoting of the vanes (22), each vane (22) being connected to the control ring portion (16) by a link (18, 19), the control ring portion (16) being held around the axis (A) of the turbo-machine by the set of links (18, 19), **characterized in that** at least two links (18) are connected to the ring portion (16) by a ball-joint connections (20), with each of the other links (19) being connected to the ring portion by a sliding pivot connections (22).

2. A control device (10) according to claim 1, **characterized in that** the two ball-joint connections (20) are spaced apart in azimuth by about 90°.

3. A control device (10) according to claim 1 or claim 2, **characterized in that** the two links (18) connected to the ring portion (16) via a ball-joint connection (20) are rigid, while the links (19) connected to the ring portion (16) via a sliding pivot connections (22) are more flexible so as to be capable of deforming elastically.

4. A control device (10) according to claim 3, **characterized in that** the more flexible links (19) are elastically deformable in torsion and in bending.

5. A control device (10) according to any one of claims 1 to 4, **characterized in that** one of the sliding pivot connections (22) is prevented from moving in sliding so as to form a pivot-only connection.

6. A turbo-machine (100) fitted with a control device for controlling pivotable vane (10) according to any preceding claim.
